# EUROPÄISCHE PATENTSCHRIFT

(11) **EP 3 919 682 B1**
(45) Veröffentlichungstag und Bekanntmachung des Hinweises auf die Patenterteilung: **04.01.2023**
(21) Anmeldenummer: 21174786.0
(22) Anmeldetag: 19.05.2021
(51) Int. Cl.: E01C 13/08, D06G 1/00

(54) **RECYCLINGVORRICHTUNG UND VERFAHREN ZUM BETREIBEN EINER RECYCLINGVORRICHTUNG**
RECYCLING DEVICE AND METHOD FOR OPERATING SAME
DISPOSITIF DE RECYCLAGE ET PROCÉDÉ DE FONCTIONNEMENT D'UN DISPOSITIF DE RECYCLAGE

(30) Priorität: 04.06.2020 DE 102020114923
(43) Veröffentlichungstag der Anmeldung: 08.12.2021
(73) Patentinhaber: SMG Sportplatzmaschinenbau GmbH, 89269 Vöhringen (DE)
(72) Erfinder: Owegeser, Johann Baptist, 89189 Illerrieden (DE)
(74) Vertreter: Patentanwälte Olbricht, Buchhold, Keulertz Partnerschaft mbB

(56) Entgegenhaltungen:
- EP-A1- 2 387 875
- EP-B1- 2 792 227

## Beschreibung

Die Erfindung betrifft eine Recyclingvorrichtung gemäß Anspruch 1 und ein Verfahren zum Betreiben einer Recyclingvorrichtung mit den Merkmalen des Anspruchs 14.

Eine solche Recyclingvorrichtung ist beispielsweise aus der EP 2792227 B1 bekannt. Die dortige mobile Vorrichtung dient dem Entfernen von Füllmaterial aus einem streifenförmigen Bandmaterial, insbesondere aus einem Kunstrasen. Entsprechende Vorrichtungen sind also aus dem Stand der Technik bekannt und werden insbesondere für die vorbeugende Instandhaltung von Kunstrasenfeldern, deren Verlegung oder deren Entfernung eingesetzt. Dabei werden auch Kunstrasenflächen abgenommen und für das Recycling oder eine Wiederverwertung aufgerollt. In Kunstrasenflächen wird zu deren Benutzung ein Füllmaterial, wie beispielsweise Sand, Kunststoffgranulat, Gummigranulat und/oder Korkgranulat eingestreut. Der Kunstrasen wird also beladen. Um nun ein Recyceln zu ermöglichen, wird das im Füllmaterial aus dem Bandmaterial entfernt, das für den weiteren Gebrauch in sogenannten Big Bags gelagert werden kann.

Die Recyclingvorrichtung der EP 2792227 B1 ist als selbstfahrendes Gerät mit einem Fahrwerk ausgestaltet, das über einen Sensor automatisch steuerbar ist. Zur Aufnahme eines Bandmaterials fährt die Recyclingvorrichtung unter das ggf. lediglich in Bahnen geschnittene Bandmaterial und nimmt diesen vom Boden auf. Das Recyceln finden also vor Ort bzw. am Verlegeort des Bandmaterials statt. Obgleich diese Möglichkeit auch ihre Vorzüge bietet, kann jedoch ein derartiges Recyceln kostspielig sein. Das ist insbesondere hinsichtlich Sportplatzsanierungen und/oder Austausch von Füllmaterialien nachteilig.

Der Erfindung liegt daher die Aufgabe zugrunde, eine Recyclingvorrichtung zu schaffen, welche die Probleme des Standes der Technik überwindet, insbesondere eine Recyclingvorrichtung vorzuschlagen, welche ein Recyceln von bereits ausgebautem und mit einem oder mehreren Füllmaterialien gefülltem Bandmaterial in einfacher und kostengünstiger Weise ermöglicht.

Hauptmerkmale der Erfindung sind in Anspruch 1 und 14 angegeben. Ausgestaltungen sind Gegenstand der Ansprüche 2 bis 13 und 15.

Erfindungsgemäß wird daher eine Recyclingvorrichtung zum Entfernen von Füllmaterial aus einem streifenförmigen Bandmaterial mit einer Abstehelemente umfassenden Oberseite und einer keine Abstehelemente aufweisenden Unterseite vorgeschlagen, insbesondere aus einem Kunstrasen, mit einem Abwickelmittel, welches an der Eingangsseite angeordnet ist und zum Abwickeln einer Rolle des Bandmaterials ausgebildet ist, einem Transportsystem zum Fördern des Bandmaterials entlang eines Transportpfades von einer Eingangsseite zu einer Ausgangsseite, das wenigstens ein Transportmittel umfasst, und einem Entleerungsmittel für das Bandmaterial, das der Unterseite zugewandt angeordnet ist, in welchem der Transportpfade umgeschlagen ist, so dass das Füllmaterial aus dem Bandmaterial herausfallen kann.

Mittels der vorgeschlagenen Recyclingvorrichtung kann ein Recyceln oder Aufbereiten erheblich schneller und kostengünstiger erfolgen. Da bisherige Recyclingvorrichtungen das Bandmaterial unterfahren mussten, um es aufzunehmen, begrenzte deren Verarbeitungsgeschwindigkeit auch deren Fahrgeschwindigkeit. Es dauerte also einen gewissen Zeitraum, bis bisherige Recyclingvorrichtungen eine betroffene Fläche abgefahren waren, um das gesamte Bandmaterial aufzunehmen. In diesem Zeitraum war die betroffene Fläche blockiert und konnte nicht weiter bewirtschaftete werden. Auch der Recyclevorgang an sich nahm einen gewissen Zeitraum in Anspruch.

Die erfindungsgemäße Recyclingvorrichtung weist ein Abwickelmittel an ihrer Eingangsseite auf. Zur Aufnahme von Bandmaterial kann nun ein zu einer Rolle aufgerolltes Bandmaterial in dem Abwickelmittel abgelegt werden, von wo aus es entlang des Transportpfades durch die Recyclingvorrichtung läuft. Somit muss die Recyclingvorrichtung nicht mehr in zeitaufwändiger Weise die betroffene Fläche abfahren. Die Recyclingvorrichtung kann beispielsweise neben der betroffenen Fläche angeordnet oder gar aufgestellt sein, oder aber auch weit entfernt. Um die betroffene Fläche nun schnellstmöglich wieder bewirtschaftbar zu machen, ist das zu recycelnde Material lediglich auszubauen bzw. in Bandmaterial zu schneiden und aufzurollen. Sodann kann es schon abtransportiert und der erfindungsgemäßen Recyclingvorrichtung zugeführt werden.

Das Abwickelmittel kann mindestens Antrieb aufweisen, vorzugsweise einen steuerbaren oder regelbaren Antrieb. Dieser Antrieb dient zum Erzeugen einer Abwickelgeschwindigkeit für das Abwickeln des Bandmaterials von einer Rolle. Dabei liegt das Bandmaterial an beweglichen Abwickelelementen an, beispielsweise an Rollen, Walzen oder Bändern, die sich entsprechend bewegen und ein Rotieren der abwickelnden Rolle bewirken. Beim Abwickeln wird durch einen solchen Antrieb erreicht, dass keine Verschiebungen auftreten oder ein Stau von Bandmaterial beim Abwickelvorgang durch, im Vergleich zur Transportgeschwindigkeit mittels der Transportmittel, zu schnelles Abwickeln erfolgt.

Unter Entleerungsmittel zu verstehen ist eine Anordnung einer oder mehrerer auf das Bandmaterial einwirkender Vorrichtungsteile, wie beispielsweise Walzen, Klopfwellen, Andruckwalzen oder sonstige zum Eingriff bzw. Angriff an dem Bandmaterial geeignete Elemente. Bestimmend ist dabei, dass das Entleerungsmittel in der Lage ist das Bandmaterial derart zu behandeln, dass das Füllmaterial aus dem Bandmaterial entfernt wird. Als Entleerungsmittel angesehen werden können beispielsweise auch Bürsten oder Zahnräder bzw. Stachel- oder Zahnwalzen, die eine Beaufschlagung des oder einen Eingriff in das Bandmaterial durchführen, um das Füllmaterial dazu zu bewegen, aus dem Bandmaterial herauszufallen, aus diesem herausgeschlagen, herausgekämmt oder herausgebürstet oder in sonstiger Art und Weise aus dem Bandmaterial entnommen zu werden. Als Entleerungsmitteln können aber auch Schlägel oder Besen, beispielsweise rotierende Besen oder rotierende Besen vorgesehen werden.

Es ist denkbar, dass das Entleerungsmittel wenigstens eine Klopfwelle zum Ausklopfen des Bandmaterials umfasst. Zwar wird ein entsprechend umgeschlagenes Bandmaterial, wie ein Kunstrasen, schon durch seine Umbiegung wenigstens teilweise entleert, da das Füllmaterial nach unten herausfallen kann. Die Entleerungseffizienz lässt sich aber deutlich steigern, wenn eine zusätzliche mechanische Behandlung des Bandmaterials vorgenommen wird, wie sie mit einer Klopfwelle vorgesehen werden kann. Diese kann im Querschnitt, je nach Anforderung, ein mehrkantiges Profil aufweisen, um die nach unten ausgerichtete Oberfläche des Bandmaterials periodisch aufzudehnen und in Schwingung zu versetzen. Damit lässt sich eine besonders gute Wirkung des Entfernungsvorgangs erzielen.

Das Entleerungsmitel kann auch ein Umlenkmittel sein oder als solches dienen, um welches das Bandmaterial umgelenkt und dadurch oberseitig aufgebogen wird, um die Abstehelemente voneinander zu distanzieren und eine verbesserte Entleerung des Füllmaterials zu realisieren. Der Umschlingungswinkel von Bandmaterial und Umlenkmittel kann beispielsweise 150° bis 190° betragen.

Als Transportmittel im Zusammenhang mit der vorliegenden Erfindung zu verstehen ist ein Mittel bzw. eine Anordnung von Elementen, die einen kontinuierlichen Transport des Bandmaterials gewährleisten. Es kann sich hierbei beispielsweise um eine Anordnung mehrerer Walzen oder Rollen handeln, über die das Bandmaterial geführt wird. Ebenfalls als Transportmittel zu verstehen ist eine Transportbahn, ein Transportgurt oder ein aus mehreren Gliedern bestehendes, eine Längserstreckung aufweisendes Band, eine Förder- oder Schleppkette oder ein Gliederband. Das Transportmittel umfasst dabei in der Regel wenigstens einen Antrieb, der den linearen Vorschub der Elemente des Transportmittels gewährleistet. Durch geeignete Umlenkmittel kann ein Endlosband oder dergleichen eingesetzt oder vorgesehen werden, auf dem das Bandmaterial geführt bzw. durch das Bandmaterial gezogen, geschleppt oder transportiert wird.

Das Bandmaterial kann ein Kunstrasenstreifen sein, wobei die Abstehelemente dann die aus dem Kunstrasenträgergewebe hervorstehenden oder dort abstehenden Fasern sind. Die Recyclingvorrichtung kann auf einem Rahmengestell aufbauen, um für einen sicheren Stand zu sorgen. Das Rahmengestell ist unmittelbar auf einem Boden, beispielsweise einem Erdboden oder Gebäudeboden abstellbar.

Weiterbildungsgemäß kann die Recyclingvorrichtung fahrwerklos ausgebildet sein. Da die Recyclingvorrichtung das Bandmaterial nicht unterfahren muss, kann sie stationär bzw. für einen Standaufbau ausgebildet sein und auf ein eigenes Fahrwerk verzichten. Das hat Vorteile insbesondere für die Stabilität der Vorrichtung, da sie breiter und schwerer bauen kann.

Weiterbildungsgemäß kann die Recyclingvorrichtung auf einem Transportboden, insbesondere einem Containerboden, aufgestellt sein. Der Transportboden ist dann Bestandteil der Recyclingvorrichtung. Die Recyclingvorrichtung kann unmittelbar auf dem Transportboden aufbauen oder über ein Rahmengestell auf dem Transportboden aufgestellt sein.

Die Recyclingvorrichtung kann zu ihrem Transport einen Transportboden umfassen. Dieser kann als geschlossener, rechteckiger Containerboden ausgebildet sein, beispielsweise als Boden eines ISO-Containers. Dessen standardisierte Containerecken ermöglicht das einfache Stapeln und Verladen. Zudem kann die Recyclingvorrichtung dann einfach von einem Kran gegriffen oder von einem Gabelstapler untergriffen und verladen werden. Zudem ist denkbar, dass auf dem Transportboden ein Transportgehäuse aufsetzbar ist, beispielsweise die Seitenwände und Decke eines ISO-Containers. Denkbar ist auch die feste Anordnung einer Recyclingvorrichtung in einem ISO-Container, wobei der Transportpfad in Längsrichtung des ISO-Containers verlaufen kann, so dass die Recyclingvorrichtung durch die geöffneten Türen mit Rollen von Bandmaterial bestückt werden kann. Durch gegenüberliegende Türen kann das entleerte Bandmaterial wieder entnommen werden. Das Verstauen in einem Gehäuse dient dem Schutz vor Witterung, Diebstahl und Vandalismus.

Weiterbildungsgemäß kann die Recyclingvorrichtung transportpfadabwärts des Entleerungsmittels ein Bürstenmittel der Unterseite zugewandt angeordnet umfassen. Durch das Aufrollen des beladenen Bandmaterials kann das auf die Oberseite eingestreute Füllmaterial an der Unterseite der anliegenden nächsten Wicklung anhaften. Das Bürstenmittel kehrt also die Unterseite oder den Kunstrasenrücken ab. Somit kann auch das Füllmaterial vom Bandmaterial entfernt werden, welches nicht bereits durch das Entleerungsmittel entfernt werden konnte. Es ergibt sich ein entleertes Bandmaterial und es wird eine Fraktionierung von Füllstoffen mit jeweils hoher Reinheit ermöglicht. Das Bürstenmittel kann eine oder mehrere um eine Rotationsachse rotierbare und von einem Antrieb angetriebene Bürstenwalzen umfassen. Der mindestens eine Antrieb ist vorzugsweise steuerbar oder regelbar. Die Bürstenwalze besitzt dabei zum Beispiel Borsten, die aufgrund der rotierenden Bewegung an dem Bandmaterial entlanggleiten und so das anliegende Füllgut abkehren. Die Rotationsachse ist dabei bevorzugt parallel zur Ebene des Bandmaterials, in der Regel horizontal orientiert. Die Drehrichtung der Bürstenwalze kann in Richtung des Transportpfades oder entgegen der Richtung des Transportpfades verlaufen. Die Drehrichtung kann auch wahlweise umschaltbar sein.

Weiterbildungsgemäß kann die Recyclingvorrichtung an der Ausgangsseite eine Aufwickeleinheit umfassen zum Aufwickeln des Bandmaterials zu einer Rolle. Die Aufwickeleinheit dient dem Aufwickeln oder Aufrollen des Bandmaterials zu einer Rolle. Dabei liegt das Bandmaterial an beweglichen Aufrollelementen an, beispielsweise an Rollen, Walzen oder Bändern, die sich entsprechend bewegen und ein Rotieren der entstehenden Rolle bewirken. Das Aufrollmittel kann mindestens Antrieb aufweisen, vorzugsweise einen steuerbaren oder regelbaren Antrieb. Dieser Antrieb dient zum Erzeugen einer Aufwickelgeschwindigkeit für das Aufrollen und unterstützt eine kompakte Wickelung beim Aufrollvorgang. Das Aufrollmittel kann eine Ausgabefunktion aufweisen, mit welcher es die fertige Rolle von einem Aufwickelort, an dem die Rolle entsteht, an einen Ausgabeort, an welchem die Rolle abtransportierbar ist, ausgibt. Es ist beispielsweise denkbar, dass ein Aufrollelement aus einer Aufwickelstellung in eine Ausgabestellung verstellbar ist. Hier könnte etwa ein Band des Aufrollmittels hydraulisch abgesenkt werden, so dass die Rolle aus dem Aufwickelort in den Ausgebeort, beispielsweise auf einer Palette, förderbar oder selbstständig rollbar ist.

Weiterbildungsgemäß kann die Recyclingvorrichtung transportpfadaufwärts der Ausgangsseite ein Reinigungsmittel zum Entfernen von Mikroteilchen umfassen, wobei das Reinigungsmittel zum Applizieren zumindest eines Wasserstrahls und/oder eines Wassernebels, eines blasenden Luftstroms, eines saugenden Luftstroms, und/oder einer Ultraschallbeaufschlagung ausgebildet ist. Um eine hohe Reinheit des Bandmaterials zu erreichen, beispielsweise für einen nachfolgenden Wiedereinbau, und ein Entweichen von Füllmaterial in die Umwelt zu verhindern, ist vorzugsweise im Endbereich des Transportpfades, vorzugsweise transportpfadabwärts des Entleerungsmittels ein Reinigungsmittel angeordnet. Dieses dient insbesondere zum Entfernen von Mikroplastik und kleinen Teilchen als die, die überwiegend von dem Entleerungsmittel entfernt werden. Das Reinigungsmittel kann einen Wasserstrahl oder mehrere Wasserstrahlen auf die Oberseite und/oder die Unterseite applizieren, vorzugsweise derart, dass das Wasser die Räume zwischen den Abstehelementen durchströmen kann, senkrecht oder abgewinkelt zur auftreffenden Fläche oder parallel zur Fläche. Zusätzlich oder alternativ kann ein Wasserneben auf die Oberseite und/oder die Unterseite appliziert werden, welcher kleinste Teilchen bindet und vom Bandmaterial entfernt. Dadurch können auch sich in der Luft um das Bandmaterial befindlichen Mikroplastikteilchen gebunden werden. Zusätzlich oder alternativ kann ein Luftstrom Mikroplastikteilchen aufsaugen oder in gezielte Richtung blasen, beispielsweise in einen Auffangbehälter. Auch eine Ultraschallbeaufschlagung des Bandmaterials ist denkbar, um Mikroplastikteilchen ab- und auszulösen.

Weiterbildungsgemäß kann die Recyclingvorrichtung transportpfadaufwärts, transportpfadabwärts und/oder an der Stelle des Entleerungsmittels ein Saugmittel umfassen. Im Bandmaterial lagert sich üblicherweise über die Nutzungsdauer eine erhebliche Menge an Schmutz und Staub ein. Durch die Beaufschlagung des Bandmaterials durch die Entleerungseinheit kann sich der Schmutz und Staub vom Bandmaterial in die Umgebungsluft ablösen, wodurch ein Staubaerosol entsteht. Dieses Staubaerosol ist mittels des Saugmittels entfernbar, wobei das Saugmittel vorzugsweise in räumlicher Nähe zum Entleerungseinheit angeordnet ist, derart, dass es seine Saugfunktion erfüllen kann. Der eingesaugte Staub und Schmutz ist somit sicher abgeführt und kann anschließend gereinigt und/oder recycelt werden. Das Saugmittel kann zum Beispiel ausgebildet sein wie ein Staubsauger, welches den entstehenden Staub Bandmaterialoberseitig und/oder Bandmaterialunterseitig absaugt. Das Saugmittel ist vorzugsweise derart ausgebildet und/oder zum Entleerungsmittel derart angeordnet, dass möglichst kein Füllmaterial eingesaugt wird, sondern lediglich das Staubaerosol. Der Absaugluftstrom kann beispielsweise entgegengesetzt zum Transportpfad verlaufen und/oder das Saugmittel kann oberhalb, bezogen auf einen Standaufbau, des Entleerungsmittels angeordnet sein. Dies erleichtert das Recyceln des eingesaugten Staubes und Schmutzes. Das Saugmittel kann auch zumindest ein Filterelement aufweisen, vorzugsweise wechselbar. Die Absaugvorrichtung dient dazu, Partikel aus dem aufgenommenen Gemisch abzuscheiden und dem Filterelement zuzuführen. Das Saugmittel kann auch ein Sauggebläse umfassen mit einem Antrieb, vorzugsweise einem steuerbaren oder regelbaren Antrieb.

Weiterbildungsgemäß kann die Recyclingvorrichtung in einem senkrechten Bereich unterhalb des Entleerungsmittels ein Fördermittel umfassen, welches vorzugsweise quer zum Transportpfad verläuft. Das mittels Entleerungsmittel aus dem Bandmaterial entfernte Füllmaterial fällt schwerkraftbedingt abwärts. Dort kann das entfernte Füllmaterial von dem Fördermittel, das als quer zum Transportpfad der Vorrichtung angeordnet und/oder als Förderband ausgebildet sein kann, zuverlässig abtransportiert werden. Dadurch wird ein ununterbrochener Betrieb der Recyclingvorrichtung möglich, der auch nicht notwendigerweise einen Speicher für das entfernte Füllmaterial erfordert. Das Fördermittel umfasst dabei in bevorzugter Weise ein Förderband, so dass eine flexible Aufnahme des aus dem Bandmaterial entfernten Füllmaterials ermöglicht wird. Das Fördermittel kann mindestens Antrieb aufweisen, vorzugsweise einen steuerbaren oder regelbaren Antrieb. Zwischen dem Entleerungsmittel und dem Förderband können Leitelemente angeordnet sein, die einen Schacht ausbilden. Die Leitelemente können beispielsweise Leitbleche sein, die vorzugsweise trichterartig das entfernte Füllmaterial zum Fördermittel leiten. Das als Förderband ausbildbare Fördermittel kann querschnittlich eine ebene Auflagefläche oder aber auch eine eingewölbte Auflagefläche aufweisen, wobei im letzteren Fall das Förderband selbst einen Teil von trichterartigen Leitelementen ausbilden kann. Dieses Fördermittel kann zu einem weiteren Fördermittel führen, welches aus Sammelfördermittel ausgebildet ist, und zu welchem mehrere oder alle Fördermittel mittelbar oder unmittelbar führen.

Weiterbildungsgemäß kann die Recyclingvorrichtung in einem senkrechten Bereich unterhalb eines von zwei benachbarten Transportmitteln ausgebildeten Zwischenbereichs ein Fördermittel umfassen, welches vorzugsweise quer zum Transportpfad verläuft. Obgleich die Transportmittel hauptsächlich dem Transport des Bandmaterials durch die Recyclingvorrichtung dienen, kann sich Füllstoff bereits in deren Bereich aus dem Bandmaterial ab- oder auslösen und schwerkraftbedingt abwärts fallen. Dort kann das betroffene Füllmaterial von dem Fördermittel, das als quer zum Transportpfad der Vorrichtung angeordnet und/oder als Förderband ausgebildet sein kann, zuverlässig abtransportiert werden. Dadurch wird eine Verunreinigung der Recyclingvorrichtung und der Umwelt sicher vermieden. Diese Fördermittel können mittelbar oder unmittelbar zum Sammelfördermittel führen. Diese Fördermittel können die Breite der Transportmittel überragen, um auch seitlich, bezogen auf den Transportpfad, herabfallendes Füllgut aufzunehmen. Das Fördermittel umfasst dabei in bevorzugter Weise ein Förderband, so dass eine flexible Aufnahme des aus dem Bandmaterial entfernten Füllmaterials ermöglicht wird. Jedes Fördermittel kann mindestens Antrieb aufweisen, vorzugsweise einen steuerbaren oder regelbaren Antrieb. Zwischen dem Zwischenbereich zweier Transportmittel und dem Förderband können Leitelemente angeordnet sein, die einen Schacht ausbilden. Die Leitelemente können beispielsweise Leitbleche sein, die vorzugsweise trichterartig das betroffene Füllmaterial zum Fördermittel leiten. Das als Förderband ausbildbare Fördermittel kann querschnittlich eine ebene Auflagefläche oder aber auch eine eingewölbte Auflagefläche aufweisen, wobei im letzteren Fall das Förderband selbst einen Teil von trichterartigen Leitelementen ausbilden kann.

Weiterbildungsgemäß kann die Recyclingvorrichtung zumindest ein Fördermittel zum Abtransport des aus dem Bandmaterial entfernten Füllmaterials umfassen. Das Fördermittel kann ein Förderband sein. Das Fördermittel kann ein Sammelfördermittel sein, welches vorzugsweise parallel zum Transportpfad seitlich zu den Transportmitteln angeordnet ist oder unterhalb der Transportmittel verläuft. Das Sammelfördermittel kann zu einem Auffangbehälter oder einem Fraktioniermittel führen. Das Fördermittel kann dabei in bevorzugter Weise ein um 180 Grad schwenkbares Förderband umfassen, so dass eine flexible Aufnahme des aus dem Bandmaterial entfernten Füllmaterials ermöglicht wird. Jedes Fördermittel kann mindestens Antrieb aufweisen, vorzugsweise einen steuerbaren oder regelbaren Antrieb.

Weiterbildungsgemäß kann die Recyclingvorrichtung derart ausgestaltet sein, dass ein Fördermittel das Füllmaterial zu einem Fraktionierungsmittel zum Fraktionieren des aus dem Bandmaterial entfernten Füllmaterials transportiert. Dieses Fördermittel kann das Sammelfördermittel sein. Das Fraktioniermittel dient dem Auftrennen des angeförderten Füllmaterial aus dem Bandmaterial in seine unterschiedlichen Bestandteile. Das Füllmaterial kann aus unterschiedlichen Bestandteilen zusammengesetzt sein. Oftmals besteht das Füllmaterial aus zwei verschiedenen Partikelsorten, zum Beispiel Sand und Granulat mit jeweils unterschiedlicher Korngröße. Diese Bestandteile sind für einen umfassenden Recyclingprozess und eine eventuelle Anschlussverwendung in vorteilhafter Weise sortierbar. Das Fraktionieren kann beispielsweise mittels Sieben und/oder Luftdruck erfolgen. Das Fraktioniermittel kann in einen Rahmen der Recyclingvorrichtung integriert oder auf dem Transportboden angeordnet sein. Sie kann jedoch auch separat anordenbar sein.

Weiterbildungsgemäß kann die Recyclingvorrichtung einen oder mehrere der folgenden Sensoren umfassen:
- einen Mengensensor, vorzugsweise an der Eingangsseite angeordnet, zur Erfassung der Menge an Füllmaterial im Bandmaterial,
- einen Füllmaterialartsensor, vorzugsweise an der Eingangsseite angeordnet, zur Erfassung der Art des Füllmaterials im Bandmaterial,
- einen Längensensor, vorzugsweise an der Eingangsseite angeordnet, zur Erfassung der Länge des Bandmaterials,
- einen Bandmaterialartsensor, vorzugsweise an der Eingangsseite angeordnet, zur Erfassung der Art des Bandmaterials und/oder der Abstehelemente,
- einen Dichtesensor, vorzugsweise an der Eingangsseite angeordnet, zur Erfassung einer Dichte von Abstehelementen,
- einen Drucksensor, vorzugsweise an dem Entleerungsmittel angeordnet, zur Erfassung einer Spannung des Bandmaterials,
- einen Temperatursensor, vorzugsweise an der Eingangsseite angeordnet, zur Erfassung einer Temperatur des Bandmaterials,
- einen Flusssensor zur Erfassung der Menge an aus dem Bandmaterial entfernten Füllmaterials,
- mindestens einen Gütesensor in dem Fraktionierungsmittel zur Bestimmung der Güte, z.B. der Reinheit, des fraktionierten Füllmaterials.

Einzelne Sensoren können auch mehrfach vorhanden sein.

Die Recyclingvorrichtung kann also zu deren Steuerung und/oder Regelung diverse Sensoren haben. Die Recyclingvorrichtung kann zudem eine Steuerung aufweisen, mit welcher jeder der Sensoren datenverbunden ist. Die Steuerung kann zudem mit den Antrieben datenverbunden sein. Diese Verbindungen kann kabellos und/oder kabelgebunden sein. Die Steuerung kann auf Basis der Daten der Sensoren die Antriebe einzeln oder in Gruppen so steuern oder regeln, dass zuvor bestimmte Prozessparameter eingehalten werden. Diese Steuerung oder Regelung kann automatisch oder aber auch manuell erfolgen. Es sind auch manuelle Steuereingriffe in eine automatische Steuerung denkbar. Die Steuerung ist zur optischen Ausgabe, beispielsweise auf einem Bildschirm, vorzugsweise mit Eingabeeinheit, aktueller und historischen Sensordaten, Antriebparameter und Prozessparameter ausgebildet.

Mittels der Sensordaten können beispielsweise die Parameter "Transportgeschwindigkeit und/oder Transportrichtung der Transportmittel", "Rotationsgeschwindigkeit der Umlenkwalze und/oder der von der Umlenkwalze getragenen Klopfwalze", "Abwickelgeschwindigkeit", "Aufwickelgeschwindigkeit", "Rotationsgeschwindigkeit des Bürstenmittels", "Wasserstrahldruck des Reinigungsmittels", "Wassermenge des Reinigungsmittels", "Luftdruck des Reinigungsmittels", "Frequenz und/oder Amplitude und/oder Pausenregime der Ultraschallreinigung des Reinigungsmittels", "Saugstärke des Saugmittels", "Fördergeschwindigkeit und/oder Förderrichtung eines oder mehrere Fördermittel", "Fraktioniergeschwindigkeit des Fraktionierungsmittels", "Rotationsgeschwindigkeit und/oder Drehmoment einer Andruckwalze" eingestellt werden, beispielsweise durch entsprechende Steuerung von Antrieben.

Zu beachten sind Interdependenzen einzelner Parameter zum sicheren und/oder effizienten Betrieb. Beispielsweise führt die Veränderung der Transportgeschwindigkeit dazu, dass zumindest die Abwickel- und/oder Aufwickelgeschwindigkeiten angepasst werden müssen, um einen Stau oder ein Reißen des Bandmaterials zu verhindern. Gleiches kann für die mindestens eine Andruckwalze gelten. Die nachfolgenden Nachstellungen von Parametern sind lediglich exemplarisch und nicht abschließend. Grundsätzlich können die Parameter zielwertorientiert nachgestellt werden. Zielwerte können beispielsweise Durchsatz, Effizienz, Reinheit des Bandmaterials sein.

Mittels Daten des mindestens einen Mengensensors kann beispielsweis die Transportgeschwindigkeit (Senkung der Transportgeschwindigkeit des Bandmaterials gegenüber einer vorbestimmten Standardtransportgeschwindigkeit bei großer Menge, damit das Füllmaterial genügend Zeit zum Verlassen des Bandmaterials hat, oder Steigerung der Transportgeschwindigkeit des Bandmaterials gegenüber einer vorbestimmten Standardtransportgeschwindigkeit bei kleiner Menge, um den Durchsatz zu erhöhen) eingestellt oder nachgestellt werden.

Mittels Daten des mindestens einen Mengensensors kann beispielsweis die Rotationsgeschwindigkeit einer Umlenkwalze und/oder einer von der Umlenkwalze getragenen Klopfwalze (Senkung der Rotationsgeschwindigkeit gegenüber einer vorbestimmten Standardrotationsgeschwindigkeit bei kleiner Menge, um das Bandmaterial zu schonen, oder Steigerung der Rotationsgeschwindigkeit gegenüber einer vorbestimmten Standardrotationsgeschwindigkeit bei großer Menge, um ausreichende Erschütterungen in das Bandmaterial einzutragen) eingestellt oder nachgestellt werden.

Mittels Daten des mindestens einen Füllmaterialartsensors können ebenfalls die Parameter an die Art des Füllmaterials angepasst werden, da unterschiedliche Füllmaterialien unterschiedlich effizient entfernt werden können. Beispielsweise kann bei Gummigranulat, welches eine hohe Reibung aufweist und daher gut im Bandmaterial haftete, die Transportgeschwindigkeit reduziert und/oder die Rotationsgeschwindigkeit der Umlenkwalze und/oder der von der Umlenkwalze getragenen Klopfwalze gesteigert werden.

Mittels Daten des mindestens einen Längensensors können ebenfalls die Parameter an die Länge des Bandmaterials angepasst werden. Dadurch ist beispielsweise ermittelbar, ob das gesamte Bandmaterial endseitig zu einer Rolle aufwickelbar ist und dort Platz findet. Auch kann abgeschätzt werden, wieviel Füllgut sich im Bandmaterial befindet, um rechtzeitig die verfügbaren Kapazitäten von Füllmaterialbehältern oder des Fraktioniermittels zu ermitteln, welchen das entnommene Füllmaterial zugeführt werden kann.

Mittels Daten des mindestens einen Bandmaterialartsensor können ebenfalls die Parameter an die Art des Bandmaterials und/oder der Abstehelemente angepasst werden. So kann beispielsweise die Transportgeschwindigkeit gesenkt werden, falls das Bandmaterial bekannt für seinen dauerhaften Halt von Füllmaterial ist. Die Längere Verweildauer in der Recyclingvorrichtung lässt mehr Zeit zum Entleeren des Bandmaterials.

Mittels Daten des mindestens einen Dichtesensors können ebenfalls die Parameter an die Dichte von Abstehelementen angepasst werden. Je Dichter die Abstehelemente angeordnet sind, desto sicherer halten sie das Füllmaterial. Diesem Aspekt kann beispielsweise mit einer Reduzierung der Transportgeschwindigkeit entgegnet werden. Analog dazu kann beispielsweise die Transportgeschwindigkeit gesteigert werden, falls die Dichte einen sicheren Halt von Füllmaterial nicht zulässt, um den Durchsatz zu steigern. Dies gilt beispielsweise auch für die Rotationsgeschwindigkeit der Umlenkwalze und/oder der von der Umlenkwalze getragenen Klopfwalze, um das Füllgut bestmöglich auszutragen.

Mittels Daten des mindestens einen Drucksensors können ebenfalls die Parameter an die Spannung des Bandmaterials angepasst werden. Es ist auch denkbar, mittels Daten des mindestens einen Drucksensor durch entsprechende Steuerung oder Regelung von betroffenen Antrieben (beispielsweise der Antriebe der Transportmittel, der Andruckwalze) die Spannung des Bandmaterials an eine vorgegebene Standardspannung oder in einen vorgegebenen Standardspannungsbereich zu bringen. Eine zu geringe Spannung führt zu niedriger Effizienz des Entleerungsmittels, da dessen mechanische Einwirkung im nicht ausreichend gespannten Bandmaterial verpufft. Eine zu hohe Spannung führt zu starker Materialbeanspruchung, insbesondere des Entleerungsmittels aber auch des Bandmaterials.

Mittels Daten des mindestens einen Temperatursensors können ebenfalls die Parameter an die Temperatur des Bandmaterials angepasst werden. Ein kaltes Bandmaterial ist in der Regel steifer als ein warmes, wodurch sich das Füllmaterial schlechter entfernen lässt. Daher kann die Transportgeschwindigkeit gesenkt werden, um die Verweildauer zu erhöhen, die Rotationsgeschwindigkeit der Umlenkwalze und/oder der von der Umlenkwalze getragenen Klopfwalze kann jedoch gesteigert werden, um durch die entstehende Reibung und/oder die Schläge dazwischen das Bandmaterial aufzuwärmen. Das erleichtert ein Aufbiegen des Bandmaterials, vorzugsweise durch die Umlenkwalze, ebenso wie ein endseitiges Aufwickeln des Bandmaterials.

Mittels Daten des mindestens einen Flusssensors können ebenfalls die Parameter an die Menge des aus dem Bandmaterial entfernten Füllmaterials angepasst werden. Sofern beispielsweise die Menge an entfernten Füllmaterials, das dem Fraktioniermittel zugefördert wird, die Kapazität und/oder Effizienzschwelle des Fraktioniermittels übersteigt, kann beispielsweise die Transportgeschwindigkeit reduziert werden, um das zugeförderte Füllmaterial zu begrenzen. Denkbar ist alternativ oder zusätzlich die Reduktion der Fördergeschwindigkeit des Fördermittels, z.B. des Sammelfördermittels und/oder der zum Sammelfördermittel fördernden übrigen Fördermittel.

Mittels Daten des mindestens einen Gütesensors können ebenfalls die Parameter an die Güte, z.B. der Reinheit, des fraktionierten Füllmaterials angepasst werden. So kann beispielsweise die Arbeit des Fraktioniermittels maximal oder effizient gestaltet werden.

Es ist auch denkbar, lediglich einen Parameter aufgrund von Sensordaten automatisch durch die Steuerung anzupassen. Es können auch mehrere Parameter oder anwendungsspezifische oder zielwertspezifische Gruppen von Parametern aufgrund von Sensordaten automatisch durch die Steuerung angepasst werden. Zielwerte können beispielsweise Durchsatz, Effizienz, Reinheit des Bandmaterials sein. Die Steuerung von Antrieben und die sensorgestützte Erfassung von Parametern ist nicht auf die Anwendung dieser Recyclingvorrichtung beschränkt, sondern ist beispielsweise auch in weiteren Kontexten denkbar, beispielsweise bei einer mobilen Recyclingvorrichtung.

Weiterbildungsgemäß kann die Recyclingvorrichtung eine Steuerung umfassen, an welche vorzugsweise die vorhandenen Sensoren angeschlossen sein können. Eine Steuerung dient einem besonders hohen Automatisierungsgrad in Kombination mit einer hohen Bearbeitungsqualität des Bandmaterials und kann dann erreicht werden, wenn die Recyclingvorrichtung mit einer sensorbasierten automatischen Steuerung ausgestattet ist.

Weiterbildungsgemäß kann die Recyclingvorrichtung für das Transportmittel einen Transportmittelantrieb, für das Entleerungsmittel einen Entleerungsmittelantrieb, für das Fördermittel einen Fördermittelantrieb und für die Klopfeinheit einen Klopfeinheitantrieb vorsehen, wobei die Steuerung mit mindestens einem der vorgenannten Antriebe in Wirkverbindung stehen kann. Die Steuerung kann also den Betrieb des mindestens einen Antriebs bewirken, steuern und regeln. So kann jedes Element an Sensordaten angepasst werden und die Recyclingvorrichtung als Gesamteinheit ganzheitlich betrachtet werden.

Erfindungsgemäß wird auch ein Verfahren zum Betreiben einer Recyclingvorrichtung, insbesondere einer Recyclingvorrichtung gemäß der Offenbarung, vorgeschlagen, umfassend zumindest die folgenden Schritte:
- Abwickeln eines Bandmaterials von einer Rolle, wobei das Bandmaterial eine Abstehelemente umfassende Oberseite und eine keine Abstehelemente aufweisende Unterseite aufweist, insbesondere aus einem Kunstrasen,
- Fördern des Bandmaterials mittels eines Transportsystems entlang eines Transportpfades von einer Eingangsseite zu einer Ausgangsseite, und
- Entleeren von Füllmaterial aus dem Bandmaterials mittels eines Entleerungsmittels, das der Unterseite zugewandt angeordnet und in einem Bereich angeordnet ist, in welchem der Transportpfad umgeschlagen ist, so dass das Füllmaterial aus dem Bandmaterial entleert werden kann.

Das erfindungsgemäße Verfahren dient dem Recyceln von bereits ausgebautem und mit einem oder mehreren Füllmaterialien gefülltem Bandmaterial in einfacher und kostengünstiger Weise, jedoch auch dem Betrieb einer Recyclingvorrichtung gemäß der Offenbarung. Die sich aus dem Verfahren ergebenden Vorteile sind bezüglich der Recyclingvorrichtung voranstehend bereits genannt, worauf hiermit verwiesen wird, um Wiederholungen zu vermeiden.

Weiterbildungsgemäß kann das Verfahren ein Bürsten der Unterseite des Bandmaterials mittels eines Bürstenmittels umfassen. Die sich aus dem Verfahren ergebenden Vorteile sind bezüglich des Bürstenmittels der Recyclingvorrichtung voranstehend bereits genannt, worauf hiermit verwiesen wird.

Weiterbildungsgemäß kann das Verfahren ein Absaugen von durch das Entleerungsmittel verursachten Aerosols, insbesondere Staubaerosols, mittels eines Saugmittels umfassen. Die sich aus dem Verfahren ergebenden Vorteile sind bezüglich des Saugmittels der Recyclingvorrichtung voranstehend bereits genannt, worauf hiermit verwiesen wird.

Weiterbildungsgemäß kann das Verfahren umfassen:
- eine Senkung der Transportgeschwindigkeit des Bandmaterials gegenüber einer vorbestimmten Standardtransportgeschwindigkeit, falls die mittels eines Temperatursensors erfasste Temperatur des Bandmaterials einen vorbestimmten Grenzwert unterschreitet, oder
- eine Steigerung der Transportgeschwindigkeit des Bandmaterials gegenüber einer vorbestimmten Standardtransportgeschwindigkeit, falls die mittels eines Temperatursensors erfasste Temperatur des Bandmaterials einen vorbestimmten Grenzwert überschreitet.

Die sich aus dem Verfahren ergebenden Vorteile sind bezüglich der temperaturgesteuerten Transportgeschwindigkeit voranstehend bereits genannt, worauf hiermit verwiesen wird.

Weiterbildungsgemäß kann das Verfahren umfassen:
- eine Senkung der Rotationsgeschwindigkeit einer Klopfeinheit und/oder einer von der Klopfeinheit getragenen Klopfwelle des Entleerungsmittels gegenüber einer vorbestimmten Standardrotationsgeschwindigkeit, falls die mittels eines Temperatursensors erfasste Temperatur des Bandmaterials einen vorbestimmten Grenzwert unterschreitet, oder
- eine Steigerung der Rotationsgeschwindigkeit einer Klopfeinheit und/oder einer von der Klopfeinheit getragenen Klopfwelle des Entleerungsmittels gegenüber einer vorbestimmten Standardrotationsgeschwindigkeit, falls die mittels eines Temperatursensors erfasste Temperatur des Bandmaterials einen vorbestimmten Grenzwert überschreitet.

Die sich aus dem Verfahren ergebenden Vorteile sind bezüglich der temperaturgesteuerten Rotationsgeschwindigkeit voranstehend bereits genannt, worauf hiermit verwiesen wird.

Weiterbildungsgemäß kann das Verfahren einen oder mehrere der folgenden Schritte umfassen:
- Erfassung der Menge an Füllmaterial im Bandmaterial mittels eines Mengensensors, vorzugsweise an der Eingangsseite angeordnet,
- Erfassung der Art des Füllmaterials im Bandmaterial mittels eines Füllmaterialartsensor, vorzugsweise an der Eingangsseite angeordnet,
- Erfassung der Länge des Bandmaterials mittels eines Längensensors, vorzugsweise an der Eingangsseite angeordnet,
- Erfassung der Art des Bandmaterials und/oder der Abstehelemente mittels eines Bandmaterialartsensor, vorzugsweise an der Eingangsseite angeordnet,
- Erfassung einer Dichte von Abstehelementen mittels eines Dichtesensor, vorzugsweise an der Eingangsseite angeordnet,
- Erfassung einer Spannung des Bandmaterials mittels eines Drucksensors, vorzugsweise an dem Entleerungsmittel angeordnet,
- Erfassung einer Temperatur des Bandmaterials mittels eines Temperatursensors, vorzugsweise an der Eingangsseite angeordnet,
- Erfassung der Menge an aus dem Bandmaterial entfernten Füllmaterials mittels eines Flusssensors.

Die sich aus dem Verfahren ergebenden Vorteile und Zusammenhänge sind bezüglich der Datenerfassung durch die genannten Sensoren voranstehend bereits genannt, worauf hiermit verwiesen wird.

Weiterbildungsgemäß kann das Verfahren vorsehen, dass zumindest ein Antrieb der Gruppe der Antriebe gebildet von Transportmittelantrieb, Entleerungsmittelantrieb, Fördermittelantrieb, Klopfeinheitantrieb und Klopfwellenantrieb in Abhängigkeit mindestens eines von einem vorangehend genannten Sensor erfassten Parameters gesteuert wird. Die sich aus dem Verfahren ergebenden Vorteile und Zusammenhänge sind bezüglich der sensorbasierten Steuerung von Antrieben bereits genannt, worauf hiermit verwiesen wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Aufbauansicht einer Vorrichtung nach der Erfindung;
- Fig. 2a: eine Perspektivansicht einer Vorrichtung nach der Erfindung;
- Fig. 2b: eine Längsschnittansicht durch die Vorrichtung nach Figur 2a; und
- Fig. 3: ein Abrollmittel.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechende Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

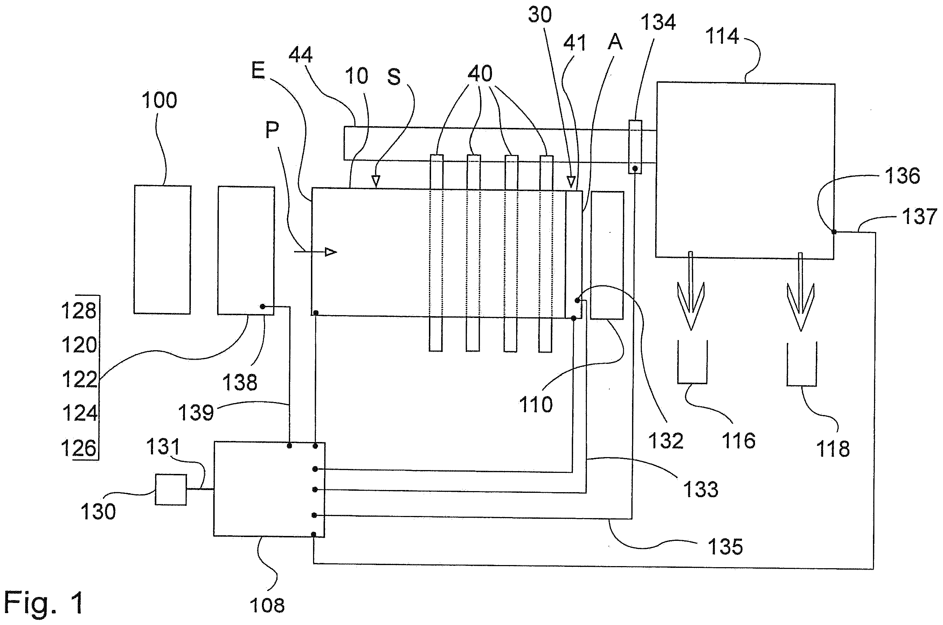

Figur 1 zeigt einen schematischen Prinzipaufbau der Recyclingvorrichtung zum Trennen von Füllmaterial aus einem streifenförmigen Bandmaterial B, das in diesem Beispiel ein zuvor flächig verlegter Kunstrasen sein soll. Das Bandmaterial B weist eine Abstehelemente umfassende Oberseite O und eine keine Abstehelemente aufweisende Unterseite U auf. Im gezeigten Fall sind die Abstehelemente die Fasern des Kunstrasens.

Die Recyclingvorrichtung weist eine Eingangsseite E auf, an welcher ein Abwickelmittel 100 angeordnet ist, das zur Aufnahme und zum Abwickeln einer mit Füllmaterial beladenen Rolle R des Bandmaterials B dient. Streifen dieses Bandmaterial B werden über ein Transportmittel 10 eines Transportsystems S entlang eines Transportpfades P über eine auch als Umlenkmittel dienende Klopfeinheit 41 zu- und schließlich wellenförmig durch ein Entleerungsmittel 30 geführt, wobei ein in dem Kunstrasen eingebrachtes Füllmaterial entfernt und auf eines der Fördermittel 40 fällt. Die als Transportbänder ausgebildeten Fördermittel 40 fördern einem dazu orthogonal verlaufenden Fördermittel 44 zu, welches als Sammelfördermittel ausgebildet ist und selbst einem Fraktionierungsmittel 114 zufördert. Das Fraktionierungsmittel 114 fraktioniert das zugeförderte Füllmaterial in seine Bestandteile und sortiert sie in Auffangbehälter 116, 118. Endseitig des Transportpfades P weist die Recyclingvorrichtung eine Ausgangsseite A auf. An der Ausgangsseite A ist eine Aufwickeleinheit 110 angeordnet, welche zur Aufnahme und zum Aufwickeln einer füllmaterialentleerten Rolle R des Bandmaterials B dient.

Die Recyclingvorrichtung umfasst eine prozessorumfassende Steuerung 108. Die Steuerung 108 ist datenverbunden mit nachfolgenden Sensoren und steht in Wirkverbindung mit nachfolgenden Antrieben der Recyclingvorrichtung. Als Sensoren sind gezeigt:
- ein Mengensensor 120 an der Eingangsseite E zur Erfassung der Menge an Füllmaterial im Bandmaterial B,
- einen Füllmaterialartsensor 122 an der Eingangsseite E zur Erfassung der Art des Füllmaterials im Bandmaterial B,
- einen Längensensor 124 an der Eingangsseite E zur Erfassung der Länge des Bandmaterials B,
- einen Bandmaterialartsensor 126 an der Eingangsseite E zur Erfassung der Art des Bandmaterials B und/oder der Art der Abstehelemente,
- einen Dichtesensor 128 an der Eingangsseite E zur Erfassung einer Dichte von Abstehelementen,
- einen Temperatursensor 130 an der Eingangsseite E zur Erfassung einer Temperatur des Bandmaterials B mit einer Datenleitung 131,
- einen Drucksensor 132 an dem Entleerungsmittel 30 zur Erfassung einer Spannung des Bandmaterials B mit einer Datenleitung 133,
- einen Flusssensor 134 zur Erfassung der Menge an aus dem Bandmaterial B entfernten Füllmaterials mit einer Datenleitung 135,
- einen Gütesensor 136 in dem Fraktionierungsmittel 114 zur Bestimmung der Güte, z.B. der Reinheit, des fraktionierten Füllmaterials mit einer Datenleitung 137.

Die Sensoren 120, 122, 124, 126 und 128 sind zu einer Sensoreinheit 138 mit einer einzigen dargestellten Datenleitung 139 zusammengefasst. Als mit der Steuerung 108 wirkverbundene Antriebe sind vorhanden:
- für jedes Transportmittel 10 ein separater Transportmittelantrieb,
- für das Entleerungsmittel 30 ein Entleerungsmittelantrieb,
- für jedes Fördermittel 40, 44 ein Fördermittelantrieb, und
- für die Klopfeinheit 41 ein Klopfeinheitantrieb.

Auf Basis der Sensordaten kann die Steuerung 108 einen, mehrere oder Alle Antriebe steuern oder regeln.

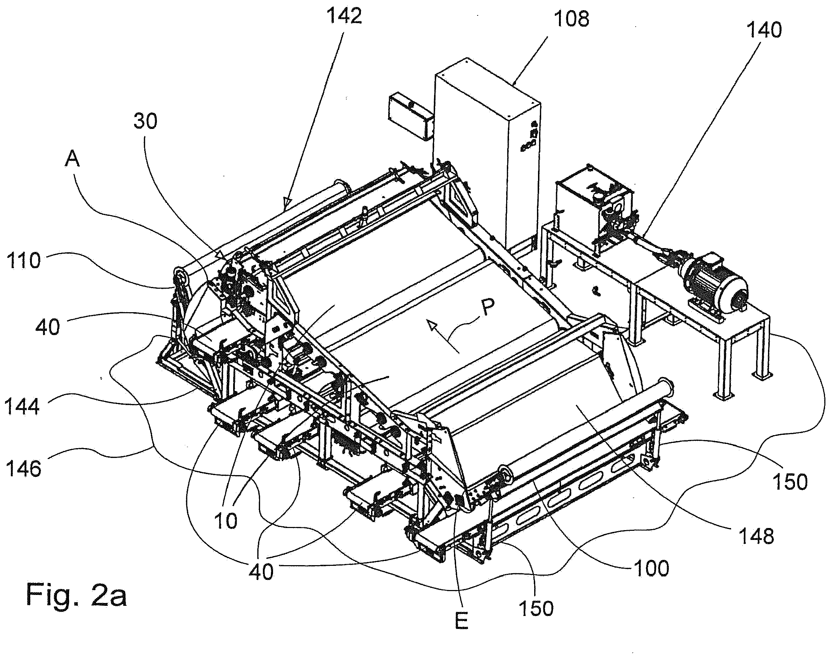

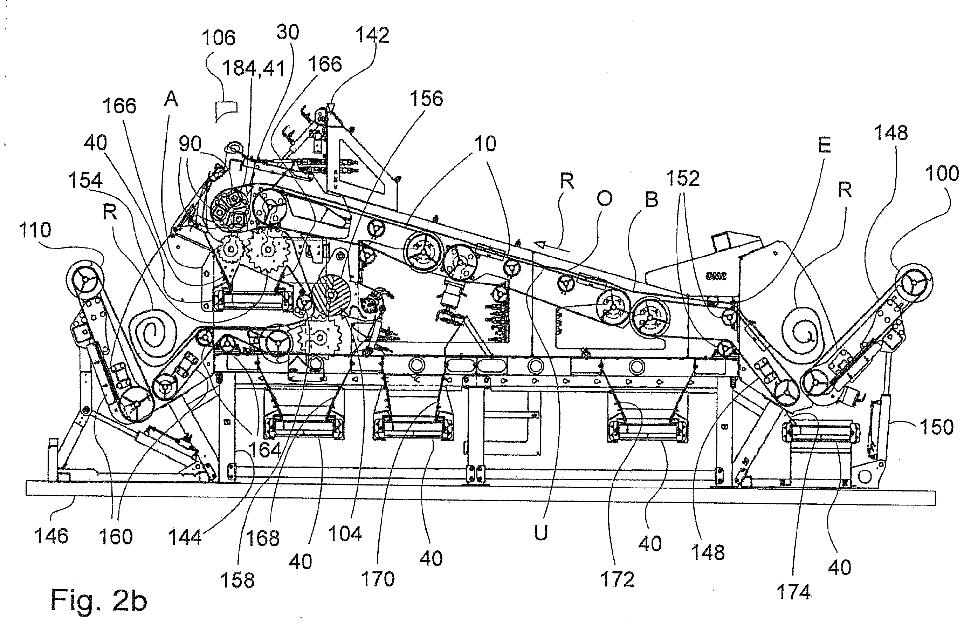

Die Figuren 2a und 2b zeigen Ansichten einer möglichen Ausführung der erfindungsgemäßen Recyclingvorrichtung, jedoch ohne Fraktioniermittel 114 und ohne dorthin förderndes Fördermittel 44. Die Recyclingvorrichtung umfasst zusätzlich zur Steuerung 108 eine Hydraulikeinheit 140, welche mit der Steuerung 108 in Wirkverbindung steht und die hydraulischen Komponenten der Recyclingvorrichtung bedient. Zusätzlich ist die Basiseinheit 142 der Recyclingvorrichtung abgebildet. Erkennbar ist, dass die Recyclingvorrichtung kein Fahrwerk aufweist, sondern fahrwerklos ausgestaltet ist und über ein Rahmengestell 144 verfügt, welches auf einem Transportboden 146 aufbaut und an diesem befestigt ist. Vom Transportboden 146 ist lediglich schematisch ein Abschnitt dargestellt. Somit ist die Recyclingvorrichtung als Standaufbau abgebildet.

Das Abwickelmittel 100 umfasst zwei Transportbänder 148, welche zueinander verkippt sind und einen V-förmigen Aufnahmeraum für die Rolle R ausbilden. Das in der Bildebene rechte Transportband 148 ist mittels Hydraulikzylinder 150 gegenüber dem anderen Transportband 148 neigbar, so dass ein flacherer oder tieferer Aufnahmeraum gebildet werden kann. Ein bewegen der Transportbänder 148 führt zum Abwickeln des Bandmaterials B von der Rolle R. Das linke der beiden Transportbänder 148 ist über Rollen 152 abgewinkelt und führt das Bandmaterial B rampenartig aufwärts zu einem als Förderband ausgebildeten Transportmittel 10, welches wiederum an ein weiteres als Förderband ausgebildetes Transportmittel 10 anschließt.

Nach dem in Transportpfadrichtung letzteren Transportmittel 10 ist das Bandmaterial über das Entleerungsmittel 30 geführt, welches mehrere Aufgaben erfüllt. Zunächst liegt zwischen Bandmaterial B und der Klopfwelle 90 der Entleerungsmittel 30 einen Umschlingungswinkel von etwa 180° vor. Dadurch dient die Klopfeinheit 41 zum Umlenken und oberseitigen Aufbiegen des Bandmaterials B mit nur einer einzigen Komponente. Das Entleerungsmittel 30 für das Bandmaterial B ist der Unterseite U zugewandt angeordnet und zwar in einem Bereich, in welchem der Transportpfad P umgeschlagen ist, so dass das Füllmaterial aus dem Bandmaterial B herausfallen kann. Das Entleerungsmittel 30 umfasst die Klopfeinheit 41 mit drei radial bezüglich der Drehachse der Klopfeinheit 41 beweglichen Klopfwellen 90. Diese können in Kulissen der Stirnseiten der Klopfeinheit 41 geführt sein. Aufgrund der Zentrifugalkraft bei Rotation der Klopfeinheit 41 werden die Klopfwellen 90 nach radial außen geschleudert und üben so eine schlagende Klopfbewegung auf das Bandmaterial B aus. Die Klopfwellen 90 sind als Vierkantrohre ausgebildet und separat drehbar gelagert, jedoch können sie auch drehfest sein. Die Klopfwellen 90 weisen keinen eigenen Antrieb auf.

Die die Klopfeinheit 41 kann Teil des Transportsystems S sein und als Umlenkmittel dienen. Die Klopfeinheit 41 umfasst eine Umlenkwalze 184 mit einem von dem Klopfeinheitantrieb rotatorisch antreibbaren Traggestell, an dem wiederum mehrere - in diesem Beispiel drei - wiederum rotatorisch antreibbare Klopfwalzen 90 gelagert sind. Die Klopfwalzen 90 weisen dabei einen im wesentlichen quadratischen Querschnitt auf, dem eine besonders intensive Klopfwirkung zukommt. Damit wird das Bandmaterial B von der Umlenkwalze 184 nicht nur gefördert und umgelenkt, sondern gleichzeitig auch besonders effizient entleert. Das am Entleerungsmittel 30 herausfallende Füllmaterial fällt dabei nach unten durch einen Schacht 186 auf das Fördermittel 40 und kann somit seitlich abtransportiert werden.

Im Bereich der Klopfeinheit 41, bzw. oberhalb derselben ist ein Saugmittel 106 zum Absaugen von Staubaerosol angeordnet. Dieses kann durch die mechanische Beaufschlagung des Bandmaterials B durch die Klopfeinheit 41 entstehen. Das Bandmaterial B wird also über die Klopfeinheit 41 und nachfolgend über zwei Andruckwalzen 154, 156 mit jeweils separatem Antrieb geführt. Die Andruckwalze 154 ist Teil des Transportsystems S und dient dem Transport des Bandmaterials B.

Zwischen der Andruckwalze 154 und dem Transportmittel 10 ist ein Spalt zur Führung des Bandmaterials B, insbesondere zu dessen reibschlüssiger Förderung vorgesehen. Eine reibschlüssige Förderung ist hierbei als Förderung zu verstehen, bei der auf beiden Seiten des Bandmaterials B Transportmittel 10 bzw. Andruckwalze 154 anliegen und in der Lage sind, allein aufgrund der zwischen dem Bandmaterial B und dem Transportmittel 10 bzw. Andruckwalze 154 bestehenden Reibung eine lineare Fortbewegung des Bandmaterials B zu erreichen. Das Bandmaterial B liegt dabei sowohl an dem Transportsystem S bzw. einem Element des Transportsystems, z.B. dem Transportmittel 10 und der Andruckwalze 154 an oder sich stützt sich dort ab. Neben der Führung des Bandmaterial B wird dabei auch dessen Bewegung in der Vorrichtung sichergestellt, so dass eine kontinuierliche Förderung des Bandmaterials B durch die für Vorrichtung und eine nahezu vollständige Entleerung des Bandmaterials B bzw. des dort vorhandenen überschüssigen Füll- oder Einstreumaterials, wie beispielsweise Sand und/oder sämtlicher sonstiger für die Verfüllung von Kunstrasenplätzen vorgesehenen und geeigneten Materialien, erfolgen kann.

Weiter Transportpfadabwärts ist ein Bürstenmittel 104 angeordnet, welches eine von einem Antrieb angetriebene Bürstenwalze 156 umfasst. Die Borsten der Bürstenwalze 156 streifen die Unterseite U, wobei eine Andruckwalze 158 auf der gegenüberliegenden Seite des Bandmaterials B ein Widerlager bildet und das Bandmaterial im gebürsteten Bereich straff hält.

Ausgangsseitig weist die Recyclingvorrichtung das Aufwickelmittel 110 auf. Das Aufwickelmittel 110 umfasst zwei Transportbänder 160, welche zueinander verkippt sind und einen V-förmigen Aufnahmeraum für die Rolle R ausbilden - einen Aufwickelort. Das in der Bildebene linke Transportband 160 ist mittels Hydraulikzylinder 162 gegenüber dem anderen Transportband 160 neigbar, so dass ein flacherer oder tieferer Aufnahmeraum gebildet werden kann. Das verstellbare Transportband 160 kann dadurch auch teilweise unter das andere Transportband 160 verstellt werden, so dass eine schiefe Ebene entsteht und die Rolle R aus dem Aufnahmeraum herausrollen kann. Ein Bewegen der Transportbänder 160 führt zum Aufwickeln des Bandmaterials B zu der Rolle R. Das rechte der beiden Transportbänder 160 ist über Rollen 164 abgewinkelt und führt das Bandmaterial B von dem Bürstenmittel 104 weg.

Die Recyclingvorrichtung umfasst fünf Fördermittel 40, wobei ein Fördermittel 40 in einem senkrechten Bereich unterhalb des Entleerungsmittels 30 angeordnet ist und quer zum Transportpfad P verläuft. Zu dem Fördermittel 40 führen trichterartig Leitelemente 166. Zu sehen sind zudem Zwischenräume zwischen den beiden Transportbändern 148, zwischen einem Transportband 148 und dem benachbarten Transportband als Transportmittel 10 und zwischen den beiden Transportbändern der Transportmittel 10. Im senkrechten Bereich unterhalb jedes dieser Zwischenräume ist ein Fördermittel 40 angeordnet. Zudem ist ein Fördermittel 40 unterhalb des Bürstenmittels 104 angeordnet. Alle diese Fördermittel 40 verlaufen quer zum Transportpfad P, wobei Leitelemente 168, 170, 172, 174 zu dem jeweiligen Fördermittel 40 führen.

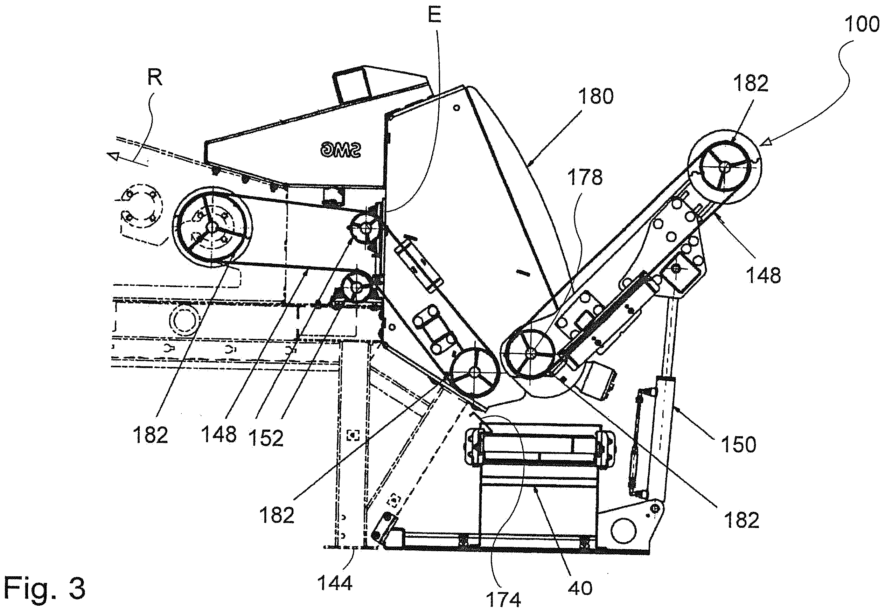

Figur 3 zeigt das Abwickelmittel 100 auf Fig. 2b in Detailansicht. Das Abwickelmittel 100 umfasst einen Abwickeltisch 176 mit dem rechten der beiden Transportbänder 148. Das linke der beiden Transportbänder 148 kann gleichsam als Element des Abwickelmittels 100 wie auch des Transportsystems S aufgefasst werden. Die Transportbänder 148 ist über Wellen 182 geführt, welche antreibbar sind. Der Hydraulikzylinder 150 für den Abwickeltisch 176 ist einends am Rahmengestell 144 und anderenends am Abwickeltisch 176 angelenkt. Das Abwickelmittel 100 kann alternativ auch ein separates mit dem Rahmengestell 144 verbundenes Gestell aufweisen. Der Abwickeltisch 176 ist um eine Drehachse 178 drehbar an einem Träger 180 angelenkt.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

**Bezugszeichenliste**

| | | | |
|---|---|---|---|
| 10 | Transportmittel | 148 | Transportband |
| 30 | Entleerungsmittel | 150 | Hydraulikzylinder |
| 40 | Fördermittel | 152 | Rolle |
| 41 | Klopfeinheit | 154 | Andruckwalze |
| 44 | Fördermittel | 156 | Bürstenwalze |
| 90 | Klopfwelle | 158 | Andruckwalze |
| 100 | Abwickelmittel | 160 | Transportband |
| 102 | Transportboden | 162 | Hydraulikzylinder |
| 104 | Bürstenmittel | 164 | Rolle |
| 106 | Saugmittel | 166 | Leitelement |
| 108 | Steuerung | 168 | Leitelement |
| 110 | Aufwickeleinheit | 170 | Leitelement |
| 114 | Fraktionierungsmittel | 172 | Leitelement |
| 116 | Auffangbehälter | 174 | Leitelement |
| 118 | Auffangbehälter | 176 | Abwickeltisch |
| 120 | Mengensensor | 178 | Drehachse |
| 122 | Füllmaterialartsensor | 180 | Träger |
| 124 | Längensensor | 182 | Welle |
| 126 | Bandmaterialartsensor | 184 | Umlenkwalze |
| 128 | Dichtesensor | 186 | Schacht |
| 130 | Temperatursensor | | |
| 131 | Datenleitung | A | Ausgangsseite |
| 132 | Drucksensor | B | Bandmaterial |
| 133 | Datenleitung | E | Eingangsseite |
| 134 | Flusssensor | P | Förderpfad |
| 135 | Datenleitung | O | Oberseite |
| 136 | Gütesensor | R | Rolle |
| 137 | Datenleitung | S | Transportsystem |
| 138 | Sensoreinheit | U | Unterseite |
| 139 | Datenleitung | | |
| 140 | Hydraulikeinheit | | |
| 142 | Basiseinheit | | |
| 144 | Rahmengestell | | |
| 146 | Transportboden | | |

## Patentansprüche

1. Recyclingvorrichtung zum Entfernen von Füllmaterial aus einem streifenförmigen Bandmaterial (B) mit einer Abstehelemente umfassenden Oberseite und einer keine Abstehelemente aufweisenden Unterseite, insbesondere aus einem Kunstrasen, mit
einem Abwickelmittel (100), welches an der Eingangsseite (E) angeordnet ist und zum Abwickeln einer Rolle (R) des Bandmaterials (B) ausgebildet ist,
einem Transportsystem (S) zum Fördern des Bandmaterials (B) entlang eines Transportpfades (P) von einer Eingangsseite (E) zu einer Ausgangsseite (A), das wenigstens ein Transportmittel (10) umfasst, und
einem Entleerungsmittel (30) für das Bandmaterial (B), das der Unterseite zugewandt angeordnet ist, in welchem der Transportpfad (P) umgeschlagen ist, so dass das Füllmaterial aus dem Bandmaterial (B) herausfallen kann.

2. Recyclingvorrichtung nach Anspruch 1, **dadurch gekennzeichnet, dass** sie fahrwerklos ausgebildet ist.

3. Recyclingvorrichtung nach einem der vorangehenden Ansprüche, **dadurch gekennzeichnet, dass** sie auf einem Transportboden (102), insbesondere einem Containerboden, aufgestellt ist.

4. Recyclingvorrichtung nach einem der vorangehenden Ansprüche, **dadurch gekennzeichnet, dass** transportpfadabwärts des Entleerungsmittels (30) ein Bürstenmittel (104) der Unterseite zugewandt angeordnet ist.

5. Recyclingvorrichtung nach einem der vorangehenden Ansprüche, **dadurch gekennzeichnet, dass** an der Ausgangsseite (A) eine Aufwickeleinheit (110) zum Aufwickeln des Bandmaterials (B) zu einer Rolle (R) angeordnet ist.

6. Recyclingvorrichtung nach einem der vorangehenden Ansprüche, **dadurch gekennzeichnet, dass** transportpfadaufwärts der Ausgangsseite (A) ein Reinigungsmittel zum Entfernen von Mikroteilchen angeordnet ist, wobei das Reinigungsmittel zum Applizieren zumindest eines Wasserstrahls und/oder eines Wassernebels, eines blasenden Luftstroms, eines saugenden Luftstroms, und/oder einer Ultraschallbeaufschlagung ausgebildet ist.

7. Recyclingvorrichtung nach einem der vorangehenden Ansprüche, **dadurch gekennzeichnet, dass** transportpfadaufwärts, transportpfadabwärts und/oder an der Stelle des Entleerungsmittels (30) ein Saugmittel (106) angeordnet ist.

8. Recyclingvorrichtung nach einem der vorangehenden Ansprüche, **dadurch gekennzeichnet, dass** in einem senkrechten Bereich unterhalb des Entleerungsmittels (30) ein Fördermittel (40) angeordnet ist, welches vorzugsweise quer zum Transportpfad (P) verläuft.

9. Recyclingvorrichtung nach einem der vorangehenden Ansprüche, **dadurch gekennzeichnet, dass** in einem senkrechten Bereich unterhalb eines von zwei benachbarten Transportmitteln (10) ausgebildeten Zwischenbereichs ein Fördermittel (40) angeordnet ist, welches vorzugsweise quer zum Transportpfad (P) verläuft.

10. Recyclingvorrichtung nach einem der vorangehenden Ansprüche, **dadurch gekennzeichnet, dass** ein Fördermittel (44) das Füllmaterial zu einem Fraktionierungsmittel (114) zum Fraktionieren des aus dem Bandmaterial (B) entfernten Füllmaterials transportiert.

11. Recyclingvorrichtung nach einem der vorangehenden Ansprüche, **dadurch gekennzeichnet, dass** es einen oder mehrere der folgenden Sensoren umfasst:
einen Mengensensor (120), vorzugsweise an der Eingangsseite (E) angeordnet, zur Erfassung der Menge an Füllmaterial im Bandmaterial (B),
einen Füllmaterialartsensor (122), vorzugsweise an der Eingangsseite (E) angeordnet, zur Erfassung der Art des Füllmaterials im Bandmaterial (B),
einen Längensensor (124), vorzugsweise an der Eingangsseite (E) angeordnet, zur Erfassung der Länge des Bandmaterials (B),
einen Bandmaterialartsensor (126), vorzugsweise an der Eingangsseite (E) angeordnet, zur Erfassung der Art des Bandmaterials (B) und/oder der Abstehelemente,
einen Dichtesensor (128), vorzugsweise an der Eingangsseite (E) angeordnet, zur Erfassung einer Dichte von Abstehelementen,
einen Drucksensor (132), vorzugsweise an dem Entleerungsmittel (30) angeordnet, zur Erfassung einer Spannung des Bandmaterials (B),
einen Temperatursensor (130), vorzugsweise an der Eingangsseite (E) angeordnet, zur Erfassung einer Temperatur des Bandmaterials (B),
einen Flusssensor (134) zur Erfassung der Menge an aus dem Bandmaterial (B) entfernten Füllmaterials,
mindestens einen Gütesensor (136) in dem Fraktionierungsmittel (114) zur Bestimmung der Güte, z.B. der Reinheit, des fraktionierten Füllmaterials.

12. Recyclingvorrichtung nach Anspruch 11, **dadurch gekennzeichnet, dass** sie eine Steuerung (108) umfasst, an welche vorzugsweise die vorhandenen Sensoren angeschlossen sind.

13. Recyclingvorrichtung nach einem der vorangehenden Ansprüche, **dadurch gekennzeichnet, dass** für das Transportmittel (10) ein Transportmittelantrieb, für das Entleerungsmittel (30) ein Entleerungsmittelantrieb, für das Fördermittel (40) ein Fördermittelantrieb und für die Klopfeinheit (41) ein Klopfeinheitantrieb vorgesehen ist und die Steuerung (108) mit mindestens einem der vorgenannten Antriebe in Wirkverbindung steht.

14. Verfahren zum Betreiben einer Recyclingvorrichtung gemäß einem der vorangehenden Ansprüche, umfassend zumindest die folgenden Schritte:
- Abwickeln eines Bandmaterials (B) von einer Rolle (R), wobei das Bandmaterial (B) eine Abstehelemente umfassende Oberseite und eine keine Abstehelemente aufweisende Unterseite aufweist, insbesondere aus einem Kunstrasen,
- Fördern des Bandmaterials (B) mittels eines Transportsystems (S) entlang eines Transportpfades (P) von einer Eingangsseite (E) zu einer Ausgangsseite (A), und
- Entleeren von Füllmaterial aus dem Bandmaterials mittels eines Entleerungsmittels (30), das der Unterseite zugewandt angeordnet und in einem Bereich angeordnet ist, in welchem der Transportpfad (P) umgeschlagen ist, so dass das Füllmaterial aus dem Bandmaterial (B) entleert werden kann.

15. Verfahren nach Anspruch 14, **gekennzeichnet durch**
Absaugen von durch das Entleerungsmittel (30) verursachten Aerosols mittels eines Saugmittels (106).

## Claims

1. Recycling device for removing filler material from a strip-shaped tape material (B) having an upper side comprising projecting elements and a lower side without projecting elements, in particular from an artificial turf, having
an unwinding means (100) which is disposed at the entry side (E) and is configured for unwinding a roll (R) of the tape material (B),
a transport system (S) for conveying the tape material (B) along a transport path (P) from an entry side (E) to an exit side (A), which comprises at least one transport means (10), and
an emptying means (30) for the tape material (B), said emptying means (30) being disposed so as to face the lower side, and the transport path (P) in said emptying means (30) being redirected such that the filler material can drop out of the tape material (B).

2. Recycling device according to Claim 1, **characterized in that** said recycling device is configured without a running gear.

3. Recycling device according to either of the preceding claims, **characterized in that** said recycling device is set up on a transport base (102), in particular a container base.

4. Recycling device according to one of the preceding claims, **characterized in that** a brushing means (104) is disposed so as to face the lower side downstream of the emptying means (30) in the transport path.

5. Recycling device according to one of the preceding claims, **characterized in that** a winding-up unit (110) for winding up the tape material (B) so as to form a roll (R) is disposed at the exit side (A).

6. Recycling device according to one of the preceding claims, **characterized in that** a cleaning means for removing microparticles is disposed upstream of the exit side (A) in the transport path, wherein the cleaning means is configured for applying at least a water jet and/or a water mist, a blowing air flow, a suctioning air flow, and/or an ultrasonic impingement.

7. Recycling device according to one of the preceding claims, **characterized in that** a suctioning means (106) is disposed upstream of the emptying means (30) in the transport path, downstream of the emptying means (30) in the transport path, and/or in place of the emptying means (30).

8. Recycling device according to one of the preceding claims, **characterized in that** a conveying means (40) which preferably runs transversely to the transport path (P) is disposed in a vertical region below the emptying means (30).

9. Recycling device according to one of the preceding claims, **characterized in that** a conveying means (40) which preferably runs transversely to the transport path (P) is disposed in a vertical region below an intermediate region configured by two neighbouring transport means (10).

10. Recycling device according to one of the preceding claims, **characterized in that** a conveying means (44) transports the filler material to a fractioning means (114) for fractioning the filler material removed from the tape material (B).

11. Recycling device according to one of the preceding claims, **characterized in that** said recycling device comprises one or a plurality of the following sensors:
a quantity sensor (120), preferably disposed at the entry side (E), for detecting the quantity of filler material in the tape material (B),
a filler material type sensor (122), preferably disposed at the entry side (E), for detecting the type of filler material in the tape material (B),
a length sensor (124), preferably disposed at the entry side (E), for detecting the length of the tape material (B),
a tape material type sensor (126), preferably disposed at the entry side (E), for detecting the type of the tape material (B) and/or of the projecting elements,
a density sensor (128), preferably disposed at the entry side (E), for detecting a density of projecting elements,
a pressure sensor (132), preferably disposed on the emptying means (30), for detecting a tension of the tape material (B),
a temperature sensor (130), preferably disposed at the entry side (E), for detecting a temperature of the tape material (B),
a flow sensor (134) for detecting the quantity of filler material removed from the tape material (B), at least one quality sensor (136) in the fractioning means (114) for determining the quality, for example the purity, of the fractioned filler material.

12. Recycling device according to Claim 11, **characterized in that** said recycling device comprises a controller (108) to which the available sensors are preferably connected.

13. Recycling device according to one of the preceding claims, **characterized in that** a transport means drive is provided for the transport means (10), an emptying means drive is provided for the emptying means (30), a conveying means drive is provided for the conveying means (40), and a beating unit drive is provided for the beating unit (41), and the controller (108) is operatively connected to at least one of the aforementioned drives.

14. Method for operating a recycling device according to one of the preceding claims, comprising at least the following steps:
- unwinding a tape material (B) from a roll (R), wherein the tape material (B) has an upper side comprising projecting elements and a lower side without projecting elements, in particular from an artificial turf,
- conveying the tape material (B) by means of a transport system (S) along a transport path (P) from an entry side (E) to an exit side (A), and
- emptying filler material from the tape material by means of an emptying means (30) which is disposed so as to face the lower side and disposed in a region in which the transport path (P) is redirected such that the filler material can be emptied from the tape material (B).

15. Method according to Claim 14, **characterized by** suctioning, by means of a suctioning means (106), of aerosol caused by the emptying means (30).

## Revendications

1. Dispositif de recyclage pour l'élimination de matériau de remplissage d'un matériau en bande (B) en forme de bande avec un côté supérieur comprenant des éléments en saillie et un côté inférieur ne présentant pas d'éléments en saillie, notamment d'un gazon artificiel, avec
un moyen de déroulement (100), qui est agencé sur le côté d'entrée (E) et qui est configuré pour le déroulement d'un rouleau (R) du matériau en bande (B),
un système de transport (S) pour l'acheminement du matériau en bande (B) le long d'un trajet de transport (P) d'un côté d'entrée (E) à un côté de sortie (A), qui comprend au moins un moyen de transport (10), et
un moyen d'évacuation (30) pour le matériau en bande (B), qui est agencé tourné vers le côté inférieur, dans lequel le trajet de transport (P) est retourné, de telle sorte que le matériau de remplissage peut tomber hors du matériau en bande (B).

2. Dispositif de recyclage selon la revendication 1, **caractérisé en ce qu'**il est configuré sans châssis.

3. Dispositif de recyclage selon l'une quelconque des revendications précédentes, **caractérisé en ce qu'il** est placé sur un plancher de transport (102), notamment un plancher de conteneur.

4. Dispositif de recyclage selon l'une quelconque des revendications précédentes, **caractérisé en ce qu'**un moyen de brossage (104) est agencé, tourné vers le côté inférieur, en aval du moyen d'évacuation (30) sur le trajet de transport.

5. Dispositif de recyclage selon l'une quelconque des revendications précédentes, **caractérisé en ce qu'**une unité d'enroulement (110) est agencée sur le côté de sortie (A) pour l'enroulement du matériau en bande (B) en un rouleau (R).

6. Dispositif de recyclage selon l'une quelconque des revendications précédentes, **caractérisé en ce qu'**un moyen de nettoyage est agencé en amont du côté de sortie (A) sur le trajet de transport pour l'élimination de microparticules, le moyen de nettoyage étant configuré pour l'application d'au moins un jet d'eau et/ou un brouillard d'eau, un courant d'air soufflant, un courant d'air aspirant et/ou une sollicitation par ultrasons.

7. Dispositif de recyclage selon l'une quelconque des revendications précédentes, **caractérisé en ce qu'**un moyen d'aspiration (106) est agencé en amont sur le trajet de transport, en aval sur le trajet de transport et/ou à l'emplacement du moyen d'évacuation (30).

8. Dispositif de recyclage selon l'une quelconque des revendications précédentes, **caractérisé en ce qu'**un moyen d'acheminement (40), qui s'étend de préférence transversalement au trajet de transport (P), est agencé dans une zone verticale en dessous du moyen d'évacuation (30) .

9. Dispositif de recyclage selon l'une quelconque des revendications précédentes, **caractérisé en ce qu'**un moyen d'acheminement (40), qui s'étend de préférence transversalement au trajet de transport (P), est agencé dans une zone verticale en dessous d'une zone intermédiaire formée par deux moyens de transport (10) voisins.

10. Dispositif de recyclage selon l'une quelconque des revendications précédentes, **caractérisé en ce qu'**un moyen d'acheminement (44) transporte le matériau de remplissage vers un moyen de fractionnement (114) pour le fractionnement du matériau de remplissage éliminé du matériau en bande (B).

11. Dispositif de recyclage selon l'une quelconque des revendications précédentes, **caractérisé en ce qu'**il comprend un ou plusieurs des capteurs suivants :
un capteur de quantité (120), de préférence agencé sur le côté d'entrée (E), pour la détection de la quantité de matériau de remplissage dans le matériau en bande (B),
un capteur de type de matériau de remplissage (122), de préférence agencé sur le côté d'entrée (E), pour la détection du type de matériau de remplissage dans le matériau en bande (B),
un capteur de longueur (124), de préférence agencé sur le côté d'entrée (E), pour la détection de la longueur du matériau en bande (B),
un capteur de type de matériau en bande (126), de préférence agencé sur le côté d'entrée (E), pour la détection du type de matériau en bande (B) et/ou des éléments en saillie,
un capteur de densité (128), de préférence agencé sur le côté d'entrée (E), pour la détection d'une densité d'éléments en saillie,
un capteur de pression (132), de préférence agencé sur le moyen d'évacuation (30), pour la détection d'une tension du matériau en bande (B),
un capteur de température (130), de préférence agencé sur le côté d'entrée (E), pour la détection d'une température du matériau en bande (B),
un capteur de flux (134) pour la détection de la quantité de matériau de remplissage éliminé du matériau en bande (B),
au moins un capteur de qualité (136) dans le moyen de fractionnement (114) pour la détermination de la qualité, p. ex. de la pureté, du matériau de remplissage fractionné.

12. Dispositif de recyclage selon la revendication 11, **caractérisé en ce qu'**il comprend une commande (108) à laquelle sont de préférence raccordés les capteurs présents.

13. Dispositif de recyclage selon l'une quelconque des revendications précédentes, **caractérisé en ce qu'**un entraînement de moyen de transport est prévu pour le moyen de transport, un entraînement de moyen d'évacuation est prévu pour le moyen d'évacuation (30), un entraînement de moyen d'acheminement est prévu pour le moyen d'acheminement (40) et un entraînement d'unité de battage est prévu pour l'unité de battage (41) et la commande (108) est en liaison active avec au moins l'un des entraînements susmentionnés.

14. Procédé d'exploitation d'un dispositif de recyclage selon l'une quelconque des revendications précédentes, comprenant au moins les étapes suivantes :
- le déroulement d'un matériau en bande (B) à partir d'un rouleau (R), le matériau en bande (B) présentant un côté supérieur comprenant des éléments en saillie et un côté inférieur ne présentant pas d'éléments en saillie, notamment d'un gazon artificiel,
- l'acheminement du matériau en bande (B) au moyen d'un système de transport (*S*) le long d'un trajet de transport (P) d'un côté d'entrée (E) à un côté de sortie (A), et
- l'évacuation de matériau de remplissage du matériau en bande au moyen d'un moyen d'évacuation (30) qui est agencé tourné vers le côté inférieur et qui est agencé dans une zone dans laquelle le trajet de transport (P) est retourné, de telle sorte que le matériau de remplissage peut être évacué du matériau en bande (B).

15. Procédé selon la revendication 14, **caractérisé par** l'aspiration d'aérosol engendré par le moyen d'évacuation (30) au moyen d'un moyen d'aspiration (106).
